# EUROPEAN PATENT APPLICATION

(11) **EP 3 647 355 A1**
(43) Date of publication of application: **06.05.2020**
(21) Application number: 18824526.0
(22) Date of filing: 11.06.2018
(51) Int. Cl.: C08L 23/08, C08K 5/14, C08K 5/32, H01M 8/0284, H01M 8/10

(54) **RUBBER COMPOSITION AND SEALANT FOR FUEL CELL SEPARATOR**

(30) Priority: 28.06.2017 JP 2017126492
(71) Applicant: NOK Corporation, Tokyo 105-8585 (JP)
(72) Inventor: SUZUKI Akihiro, Fujisawa-shi Kanagawa 251-0042 (JP); KAWASAKI Kuniyoshi, Fujisawa-shi Kanagawa 251-0042 (JP)
(74) Representative: Beckmann, Claus
(86) International application number: PCT/JP2018/022233
(87) International publication number: WO 2019/003885

(57) **Abstract**

A rubber composition comprising a nitroxide compound crosslinking agent containing 2.3 to 5.0 parts by weight of organic peroxide having a one-hour half-life temperature of 110 to 130°C, based on 100 parts by weight of an ethylene-butene-non-conjugated diene copolymer. Then, the ethylene-butene-non-conjugated diene copolymer can be used by being blended with EPDM in an amount of 50 wt% or less in the total amount of the ethylene-butene-non-conjugated diene copolymer and EPDM. A sealing material for fuel cell separators comprising a crosslinked molded article of the rubber composition, having functions required as a sealing material for separators, and having improved low temperature sealing properties and scorch resistance as well as excellent injection molding properties.

## Description

### TECHNICAL FIELD

The present invention relates to a rubber composition and a sealing material for fuel cell separators. More particularly, the present invention relates to a rubber composition and a sealing material for fuel cell separators, which can satisfy low temperature sealing properties.

### BACKGROUND ART

Fuel cells have excellent characteristics, such as almost no need to use fossil fuels, for which exhaustion of resources has to be taken into consideration, almost no noise during power generation, and higher energy recovery rate than other energy power generation mechanisms. Accordingly, their parctical use has started.

In particular, polymer electrolyte fuel cells (PEFCs) are operated at a lower temperature compared with other types of fuel cells; thus, regarding the parts constituting the cells, there is no concern for corrosion in terms of materials. In addition, PEFCs can discharge relatively higher current, although they are operated at a low temperature. PEFCs have attracted attentions, not only for home cogeneration, but also as alternative power sources for internal combustion engines mounted in vehicles.

Of the parts constituting PEFCs, a separator generally has a plurality of parallel grooves formed on both sides or one side of a flat plate, and plays the role to transmit electricity generated in the gas diffusion electrode in the fuel cell to the outside, to drain water generated in the process of power generation to the grooves, and to secure the grooves as the flow passage of the reactant gas flowing into the fuel cell.

Separators for fuel cells having grooves that play such a role are required to be downsized. Further, since many separators are stacked for use, there is a demand for sealing materials for separators that have excellent durability and that can be used for a long period of time.

Moreover, the electrolyte membrane of PEFCs is made of a polymer membrane, such as a polytetrafluororesin membrane having a perfluorosulfonic side chain group. When crosslinking is performed while the sealing material is arranged in the vicinity of the electrolyte membrane, it is necessary to be careful so that the electrolyte membrane is not degraded by being heated during crosslinking. That is, as the sealing material for fuel cells, those that can be crosslinked at a lower temperature and for a shorter period of time are preferable.

As such sealing materials for separators, for example, those using EPDM have been proposed.

Patent Document 1 discloses, as an adhesive sealing material for fuel cells crosslinkable at a low temperature and having high sealing properties and adhesion reliability, one comprising a crosslinked product of a rubber composition comprising (A) EPDM, (B) an organic peroxide crosslinking agent having a one-hour half-life temperature of 130°C or less, (C) a crosslinking aid, and (D) an adhesive component that is a combination of a resorcinol compound and a melamine-based compound, or a silane coupling agent. Comparative Example 4 indicates that when the adhesion component (D) is not contained, inferior results are obtained in a 90° peel test and a T type peel test (initial stage, 100 hours and 1000 hours after dipping in 90°C warm water).

Further, Patent Document 2 indicates that the rubber composition disclosed in Patent Document 1 is further compounded with 5 to 30 parts by weight of ethylene-α-olefin copolymer based on 100 parts by weight of EPDM. Examples of α-olefins include α-olefins having 3 to 10 carbon atoms, such as propylene, butene-1, pentene-1, hexene-1, 4-methylpentene-1, heptene-1, octene-1, nonene-1, and decene-1. An aluminate-based coupling agent is also described as the above component (D).

According to the description of the Example using an ethylene-octene-1 copolymer, whose α-olefin is octene-1, tensile strength, elongation at break, 90° peel strength, and volume resistivity (insulation) are high, and the compounding effect of the ethylene-α-olefin copolymer is emphasized.

However, as one of the problems of fuel cell vehicles, design and control are required so as to avoid situations in which the vehicles cannot be operated due to freezing of FC stacks and system components in any of the following cases: at the time of start under low temperature conditions, during running under low temperature conditions, and at the time of being left at a temperature below the freezing point after running. Sealing materials are also required to have cold resistance; however, the cold resistance of EPDM is not considered to be sufficient.

In order to improve the low temperature properties of EPDM, means to improvement in terms of formulation by adding a plasticizer, such as oil, thus keeping a rubber-like state even at a low temperature is well known. However, in such a case, other problems, such as reduced rubber strength, reduced rubber elasticity, kneading properties, dispersibility, and bleed resistance have been newly found. For this type of use, it is also important to serve as a sealing material for separators. It has to be said that when EPDM is used, it is difficult to improve low temperature sealing properties while maintaining required functions.

Moreover, in injection molding, a compound is preheated beforehand in terms of fluidity, and scorch is thus likely to occur. The composition proposed in Patent Document 2 is considered to be highly susceptible to this influence. When flowing occurs while being accompanied by a crosslinking reaction, crosslinking becomes uneven, which causes a problem that rubber products of high quality cannot be obtained.

### PRIOR ART DOCUMENTS

### PATENT DOCUMENTS

Patent Document 1 : JP-A-2009-94056
Patent Document 2 : JP-A-2011-249283
Patent Document 3 : JP-A-2011-213822
Patent Document 4 : JP-A-2007-327063

### OUTLINE OF THE INVENTION

### PROBLEM TO BE SOLVED BY THE INVENTION

An object of the present invention is to provide a rubber composition that can yield a sealing material for fuel cell separators, the sealing material having functions required as a sealing material for separators, and having improved low temperature sealing properties and scorch resistance as well as excellent injection molding properties.

### MEANS FOR SOLVING THE PROBLEM

The above object of the present invention can be achieved by a rubber composition comprising a nitroxide compound crosslinking agent containing 2.3 to 5.0 parts by weight of organic peroxide having a one-hour half-life temperature of 110 to 130°C, based on 100 parts by weight of an ethylene-butene-non-conjugated diene copolymer. The ethylene-butene-non-conjugated diene copolymer (EBT copolymer) can be used by being blended with EPDM in an amount of 50 wt% or less in the total amount of the EBT copolymer and EPDM. A crosslinked molded article of this rubber composition forms a sealing material for fuel cell separators.

### EFFECT OF THE INVENTION

The sealing material for fuel cell separators comprising a crosslinked molded article of the rubber composition according to the present invention uses an EBT copolymer, thereby providing a sealing material for separators having cold resistance superior to EPDM. The cold resistance is evaluated by the TRIO value and TR70 value of the low-temperature elasticity recovery test according to JIS K-6261 corresponding to ISO 2921.

Since the sealing material for separators exhibits excellent cold resistance without using various plasticizers, various problems caused by the use of plasticizers can be solved. Moreover, the sealing material for separators does not contain a resorcinol-based compound-melamine-based compound, an aluminate-based coupling agent, or a silane coupling agent.

Further, the Mooney viscosity of the rubber composition according to JIS K-6300 corresponding to ISO 289-1 is lower than that of a rubber composition using EPDM; thus, for example, production efficiency can be greatly improved for injection molding etc., thereby making it possible to largely reduce the production cost. At the time of injection molding, an organic peroxide-containing nitroxide compound crosslinking agent having excellent scorch resistance is used; thus, molding is possible at a low temperature for a short period of time.

In addition, the flexibility of the sealing material for separators is superior to that of a sealing material using EPDM, as is reflected on the rubber hardness according to JIS K-6253-1 corresponding to ISO 18517; thus, in order to realize equivalent hardness, a low-cost reinforcing agent can be compounded, thereby largely reducing the material cost.

### EMBODIMENTS FOR CARRYING OUT THE INVENTION

The ethylene-butene-non-conjugated diene copolymer (EBT copolymer) used in the present invention is described in Patent Document 3. Butene-1 is mainly used as the butene. As the non-conjugated diene, cyclic or chain non-conjugated dienes, such as 5-ethylidene-2-norbornene, dicyclopentadiene, 5-vinyl-2-norbornene, and 1,4-hexadiene, are used; cyclic non-conjugated dienes are preferably used.

The EBT copolymer has a copolymerization composition comprising 50 to 95 mol%, preferably 70 to 95 mol%, of a structural unit derived from ethylene, 4.9 to 49.9 mol%, preferably 4.9 to 29.9 mol%, of a structural unit derived from butene, and 0.1 to 5 mol%, preferably 0.1 to 3 mol%, of a structural unit derived from non-conjugated diene, and is synthesized using a metallocene-based compound, such as (tert-butylamido)dimethyl(η⁵-2-methyl-s-indacen-1-yl)silanetitanium (II) 1,3-pentadine, as a polymerization catalyst.

Although the EBT copolymer can be used alone, up to 50 parts by weight in 100 parts by weight of the EBT copolymer can be replaced by EPDM. If EPDM is used for replacement at a ratio greater than the above range, TR70, which serves as an index of cold resistance, is deteriorated.

Patent Document 3 states that vulcanization of the EBT copolymer is performed using a sulfur-based compound, an organic peroxide, a phenol resin, an oxy compound, etc.

It is described that dicumyl peroxide, 2,5-dimethyl-2,5-di(tert-butylperoxy)hexane, 2,5-dimethyl-2,5-di(tert-butylperoxy)hexyne-3, 2,5-dimethyl-2,5-di(benzoylperoxy)hexane, di-tert-butyl peroxide, di-tert-butylperoxy-3,3,5-trimethylcyclohexane, tert-butyl hydroperoxide, and the like are used as the organic peroxide. In the Examples of Patent Document 3, sulfur and dicumyl peroxide are used as vulcanizing agents.

In the present invention, a nitroxide compound containing an organic peroxide having a one-hour half-life temperature of 110 to 130°C is used as a crosslinking agent. Such a scorch-resistant crosslinking agent is described in Patent Document 4. In practice, commercial products, such as the LUPEROX series (produced by Arkema), can be used as they are. Moreover, when the content of nitroxide, which reacts slowly, is high, a nitroxide compound-crosslinking accelerator composition crosslinking agent, which further uses a crosslinking accelerator in combination, can be used.

As the organic peroxide having a one-hour half-life temperature of 110 to 130°C, peroxyketal or peroxyester, preferably peroxyketal, is used. The one-hour half-life temperature is a temperature when the half-life becomes 1 hour at a half-life temperature, which is an indicator indicating the decomposition temperature of an organic peroxide. The lower the one-hour half-life temperature is the more easily, the organic peroxide is decomposed at a lower temperature.

Examples of the peroxyketal include n-butyl-4,4-di(t-butylperoxy)valerate, 2,2-di(t-butylperoxy)butane, 2,2-di[4,4-(t-butylperoxy)cyclohexyl]propane, 1,1-di(t-butylperoxy)cyclohexane, di(3,5,5-trimethylhexanoyl)peroxide, 1,1-di(t-hexylperoxy)cyclohexane, 1,1-di(t-hexylperoxy)-3,3,5-trimethyl cyclohexane, 1,1-di(t-butylperoxy)-2-methyl cyclohexane, and the like.

Moreover, examples of the peroxyester include tert-butylperoxybenzoate, tert-butylperoxyacetate, tert-hexylperoxybenzoate, tert-butylperoxy-2-ethylhexyl monocarbonate, tert-butylperoxylaurate, tert-butylperoxyisopropylmonocarbonate, tert-butylperoxy-3,5,5-trimethylhexanoate, tert-butylperoxy maleic acid, tert-hexylperoxyisopropylmonocarbonate, and the like.

If an organic peroxide having a one-hour half-life temperature of higher than 130°C is used, the value of the vulcanization degree T90 increases. In contrast, if an organic peroxide having a one-hour half-life temperature of less than 110°C is used, the organic peroxide is likely to be decomposed due to heat generation during kneading, which eventually causes scorch.

Examples of the nitroxide compound include 2,2,6,6-tetramethyl-1-piperidyloxy, 4-hydroxy-2,2,6,6-tetramethyl-1-piperidyloxy, 4-methoxy-2,2,6,6-tetramethyl-1-piperidyloxy, 4-oxo-2,2,6,6-tetramethyl-1-piperidyloxy, 2,2,5,5-tetramethyl-1-pyrrolidinyloxy, bis(1-oxy-2,2,6,6-tetramethyl-4-piperidyl) sebacate, 2,2,6,6-tetramethyl-4-hydroxy-1-piperidyloxymonophosphonate, 3-carboxy-2,2,5,5-tetramethylpyrrolidinyloxy, and the like.

Examples of the crosslinking accelerator used in combination with the nitroxide compound include the following.
(1)

   R^{x}C₆H₅₋ₙ[C(CH₃)=CH₂]ₙ [I]

   R^{x}: hydrogen atom or C₁-C₉ alkyl group
   n: 1 to 3

   For example, α-methylstyrene, o-, m- and p-diisopropenylbenzene, 1,2,4-triisopropenylbenzene, 1,3,5-triisopropenylbenzene, 3-isopropyl-o-diisopropenylbenzene, 4-isopropyl-o-diisopropenylbenzene, 4-isopropyl-m-diisopropenylbenzene, 5-isopropyl-m-diisopropenylbenzene, 2-isopropyl-p-diisopropenylbenzene, and the like.
(2)

   (CH₃)₂C(C₆H₄R^{y})CH₂C(C₆H₄R^{z})=CH₂ [II]

   R^{y}, R^{z}: C₁-C₉ alkyl group
   For example, 2,4-bis(3-isopropylphenyl)-4-methyl-1-pentene, 2,4-bis(4-isopropylphenyl)-4-methyl-1-pentene, 2-(3-isopropylphenyl)-4-(4-isopropylphenyl)-4-methyl-1-pentene, 2-(4-isopropylphenyl)-4-(3-isopropylphenyl)-4-methyl-1-pentene, 2,4-bis(3-methylphenyl)-4-methyl-1-pentene, 2,4-bis(4-methylphenyl)-4-methyl-1-pentene, and the like.
(3) Methyl methacrylate, lauryl methacrylate, allyl methacrylate, trimethylolpropane triacrylate, triallyl cyanurate, triallyl isocyanurate, triallyl phosphate, tetraallyloxyethane, diallyldiglycol carbonate, triallyl trimellitate, triallyl citrate, diallyl adipate, diallyl terephthalate, diallyl oxalate, diallyl fumarate, ethylene glycol dimethacrylate, 2-hydroxyethyl methacrylate, and the like.
(4) bismaleimide, biscitraconimide,
   For example, N,N'-m-phenylene bismaleimide, N,N'-ethylene bismaleimide, N,N'-hexamethylene bismaleimide, 1,2-N,N'-dimethylene biscitraconimide, 1,2-N,N-trimethylene biscitraconimide, and the like.
(5) TEMPO (2,2,6,6-tetramethyl-1-piperidyloxy), 4-hydroxyTEMPO (4-hydroxy-2,2,6,6-tetramethyl-1-piperidyloxy), 4-methoxyTEMPO (4-methoxy-2,2,6,6-tetramethyl-1-piperidyloxy), 4-oxoTEMPO (4-oxo-2,2,6,6-tetramethyl-1-piperidyloxy), and the like.

The nitroxide and the crosslinking accelerator are used in such a manner that the weight ratio of the nitroxide is 0.2 to 5 times, preferably 0.5 to 2 times, of the crosslinking accelerator.

The organic peroxide is used in a weight ratio of 1 to 100 times, preferably 10 to 40 times, of the nitroxide. The radical initiator is used at a ratio of 2.3 to 5.0 parts by weight, preferably 3 to 4 parts by weight, based on 100 parts by weight of the EBT copolymer.

In Example 7 of Patent Document 4, crosslinking of EPDM is performed using di(tert-butylperoxyisopropyl)benzene as an organic peroxide, 4-hydroxy TEMPO as nitroxide, and N,N'-m-phenylene bismaleimide as a crosslinking accelerator.

Other than the organic peroxide, carbon black (e.g., MT carbon black) or a silica reinforcing agent, a crosslinking aid, such as a maleimide compound, triallyl (iso)cyanurate, or trimethylolpropane trimethacrylate, can also be compounded and used. Further, hardness modifiers (e.g., silica, clay, and talc), processing aids (e.g., process oil), antioxidants, and the like can also be compounded and used, if necessary.

A rubber composition obtained by compounding an EBT copolymer or an EBT copolymer-EPDM blend with an organic peroxide-containing nitroxide compound crosslinking agent using an open roll or the like is disposed between structural members to be bonded and sealed, and crosslinked. Crosslinking is preferably performed at about 120 to 200°C for about 0.5 to 30 minutes. If necessary, oven vulcanization (secondary vulcanization) is performed at about 150 to 250°C for about 0.5 to 24 hours.

Patent Document 3 indicates that EBT copolymer is used as various sealing materials etc.; however, the organic peroxide crosslinking agent used therein is nowhere specified. Further, no disclosure is made to sealing materials for fuel cell separators, for which cold resistance, and scorch resistance during injection molding, are required.

### EXAMPLES

The following describes the present invention with reference to Examples.

### Comparative Example 1

| | |
|---|---|
| EBT copolymer (EBT K-9330, produced by Mitsui Chemicals, Inc.) | 100 parts by weight |
| Peroxyketal (Perhexa C, produced by NOF Corporation; purity: 70%, 1,1-di(tert-butylperoxy)cyclohexane, one-hour half-life temperature: 111 °C) | 6 parts by weight |
| MT carbon black (THERMAX N990, produced by Cancarb) | 60 parts by weight |

The above components were kneaded using an open roll, a Banbury mixer, a kneader, etc., and the kneaded product was vulcanized at 180°C for 10 minutes, followed by oven vulcanization (secondary vulcanization) at 150°C for 24 hours.

The obtained kneaded products and vulcanizates were evaluated or measured for characteristics described in the following items.

Vulcanization degree T90: The time (T90) until torque corresponding to 90% of the maximum torque was achieved was revealed from the vulcanization curve of each rubber kneaded product under 180°C temperature conditions. When T90 was 150 seconds or less, this case was evaluated as ○, and when T90 was greater than 150 seconds, this case was evaluated as ×.

Scorch T5: The time (T5) required for torque to increase by 5 Mooney units at 125°C or less was revealed. When T5 was 15 minutes or more, this case was evaluated as ○, and when T5 was less than 15 minutes, this case was evaluated as ×.
Elongation at break: according to JIS K-6251 (in consideration of pressing crack)
The evaluation was as follows: 300% or more: ○, and less than 300%: ×.
Low-temperature elasticity recovery test test: according to JIS K-6261
(TRIO value) Ⓞ: -55 or less, ○: -50 or less, × : less than -50
(TR 70 value) Ⓞ: -40 or less, ○: -35 or less, × : less than -35

### Comparative Example 2

In Comparative Example 1, 2 parts by weight of dicumyl peroxide (Percumyl D, produced by NOF Corporation; purity: 90% or more, one-hour half-life temperature: 136°C) was used in place of 6 parts by weight of 1,1-di(tert-butylperoxy)cyclohexane.

### Comparative Example 3

In Comparative Example I, 3 parts by weight of n-butyl-4,4'-di(t-butylperoxy)valerate (Perhexa V, produced by NOF Corporation; purity: 90% or more, one-hour half-life temperature: 127°C) was used in place of 6 parts by weight of 1,1-di(tert-butylperoxy)cyclohexane.

### Comparative Example 4

In Comparative Example 1, 5 parts by weight (2.0 parts by weight as an organic peroxide) of nitroxide compound crosslinking agent (LUPEROX 331 XL40-SP, produced by Arkema; organic peroxide concentration: 40%, remainder: silica and anti-scorch components) containing 1,1-di(tert-butylperoxy)cyclohexane (one-hour half-life temperature: 110°C) was used in place of 6 parts by weight of 1,1-di(tert-butylperoxy)cyclohexane.

### Example 1

In Comparative Example 1, 7 parts by weight (2.8 parts by weight as an organic peroxide) of nitroxide compound crosslinking agent (LUPEROX 331 XL40-SP) containing 1,1-di(tert-butylperoxy)cyclohexane was used in place of 6 parts by weight of 1,1-di(tert-butylperoxy)cyclohexane.

### Example 2

In Comparative Example 1, 10 parts by weight (4.0 parts by weight as an organic peroxide) of nitroxide compound crosslinking agent (LUPEROX 331 XL40-SP) containing 1,1-di(tert-butylperoxy)cyclohexane was used in place of 6 parts by weight of 1,1-di(tert-butylperoxy)cyclohexane.

### Example 3

In Comparative Example 1, 12 parts by weight (4.8 parts by weight as an organic peroxide) of nitroxide compound crosslinking agent (LUPEROX 331 XL40-SP) containing 1,1-di(tert-butylperoxy)cyclohexane was used in place of 6 parts by weight of 1,1-di(tert-butylperoxy)cyclohexane.

### Comparative Example 5

In Comparative Example 1, 14 parts by weight (5.6 parts by weight as an organic peroxide) of nitroxide compound crosslinking agent (LUPEROX 331 XL40-SP) containing 1,1-di(tert-butylperoxy)cyclohexane was used in place of 6 parts by weight of 1,1-di(tert-butylperoxy)cyclohexane.

### Comparative Example 6

In Example 2, the same amount (100 parts by weight) of EPDM (JSR EP27, produced by JSR) was used in place of EBT copolymer.

### Comparative Example 7

In Comparative Example 1, 4 parts by weight (1.6 parts by weight as an organic peroxide) of nitroxide compound crosslinking agent (LUPEROX 230 XL40-SP, produced by Arkema; organic peroxide concentration: 40%, remainder: silica, calcium carbonate and anti-scorch components) containing n-butyl-4,4'-di(t-butylperoxy)valerate (one-hour half-life temperature: 127°C) was used in place of 6 parts by weight of 1,1-di(tert-butylperoxy)cyclohexane.

### Example 4

In Comparative Example 1, 6 parts by weight (2.4 parts by weight as an organic peroxide) of nitroxide compound crosslinking agent (LUPEROX 230 XL40-SP) containing n-butyl-4,4'-di(t-butylperoxy)valerate (one-hour half-life temperature: 127°C) was used in place of 6 parts by weight of 1,1-di(tert-butylperoxy)cyclohexane.

### Example 5

In Comparative Example 1, 7.5 parts by weight (3.0 parts by weight as an organic peroxide) of nitroxide compound crosslinking agent (LUPEROX 230 XL40-SP) containing n-butyl-4,4'-di(t-butylperoxy)valerate (one-hour half-life temperature: 127°C) was used in place of 6 parts by weight of 1,1-di(tert-butylperoxy)cyclohexane.

### Example 6

In Comparative Example 1, 10 parts by weight (4.0 parts by weight as an organic peroxide) of nitroxide compound crosslinking agent (LUPEROX 230 XL40-SP) containing n-butyl-4,4'-di(t-butylperoxy)valerate (one-hour half-life temperature: 127°C) was used in place of 6 parts by weight of 1,1-di(tert-butylperoxy)cyclohexane.

### Comparative Example 8

In Comparative Example 1, 13 parts by weight (5.2 parts by weight as an organic peroxide) of nitroxide compound crosslinking agent (LUPEROX 230 XL40-SP) containing n-butyl-4,4'-di(t-butylperoxy)valerate (one-hour half-life temperature: 127°C) was used in place of 6 parts by weight of 1,1-di(tert-butylperoxy)cyclohexane.

Table below shows the results obtained in the above Examples and Comparative Examples.

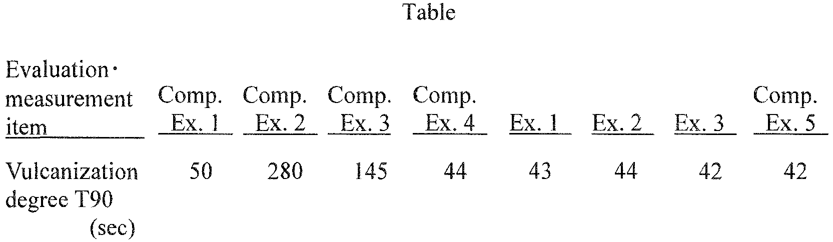

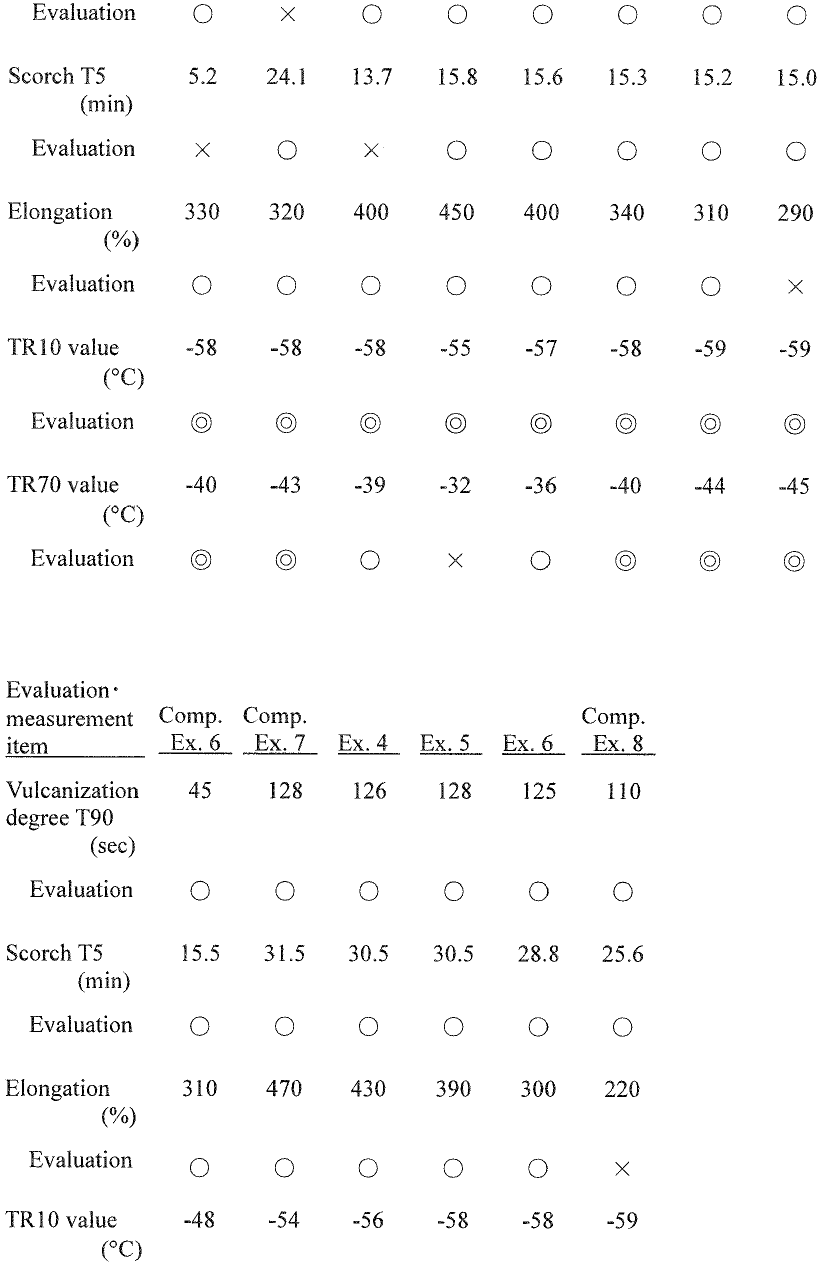

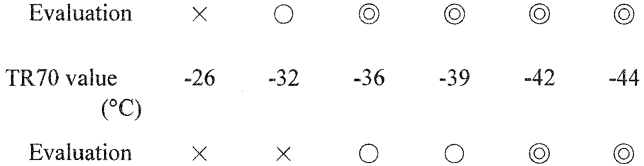

The above results reveal the following:
(1) The products crosslinked using the nitroxide compound crosslinking agents of the present invention each containing a specific amount of an organic peroxide having a specific one-hour half-life temperature satisfy all of the vulcanization degree T90, scorch T5, elongation at break, and low-temperature elasticity recovery test, all of which are required for sealing materials for fuel cell separators.
(2) When only an organic peroxide crosslinking agent having a specific one-hour half-life temperature is used, scorch T5 is not satisfied (Comparative Examples 1 and 3).
(3) When only an organic peroxide crosslinking agent having a one-hour half-life temperature higher than the specified temperature is used, the vulcanization degree T90 is not satisfied (Comparative Example 2).
(4) When the amount of organic peroxide in the nitroxide compound crosslinking agent containing a specific amount of an organic peroxide having a specific one-hour half-life temperature is less than the predetermined amount, the TR70 value is not satisfied (Comparative Examples 4 and 7).
(5) When the amount of organic peroxide in the nitroxide compound crosslinking agent containing a specific amount of an organic peroxide having a specific one-hour half-life temperature is greater than the predetermined amount, the elongation at break is not satisfied (Comparative Examples 5 and 8).
(6) When EPDM is used in place of the EBT copolymer, the low-temperature elasticity recovery test is not satisfied (Comparative Example 6).

## Claims

1. A rubber composition comprising a nitroxide compound crosslinking agent containing 2.3 to 5.0 parts by weight of organic peroxide having a one-hour half-life temperature of 110 to 130°C, based on 100 parts by weight of an ethylene-butene-non-conjugated diene copolymer.

2. The rubber composition according to claim 1, wherein the organic peroxide having a one-hour half-life temperature of 110 to 130°C is a peroxyketal-based or peroxyester-based organic peroxide.

3. The rubber composition according to claim 1, wherein the nitroxide compound crosslinking agent is a nitroxide compound-crosslinking accelerator composition crosslinking agent.

4. The rubber composition according to claim 1, wherein the ethylene-butene-non-conjugated diene copolymer is blended with EPDM in an amount of 50 wt% or less in the total amount of the ethylene-butene-non-conjugated diene copolymer and EPDM.

5. The rubber composition according to claim 1, which does not contain the plasticizers.

6. The rubber composition according to claim 1, which does not contain a resorcinol-based compound-melamine-based compound, an aluminate-based coupling agent, or a silane coupling agent.

7. The rubber composition according to claim 1 or 4, which is used for crosslinking molding of a sealing material for fuel cell separators.

8. A sealing material for fuel cell separators comprising a crosslinked molded article of the rubber composition according to claim 7.
